# EUROPÄISCHE PATENTSCHRIFT

(11) **EP 3 848 763 B1**
(45) Veröffentlichungstag und Bekanntmachung des Hinweises auf die Patenterteilung: **21.12.2022**
(21) Anmeldenummer: 20150747.2
(22) Anmeldetag: 08.01.2020
(51) Int. Cl.: G05B 17/02, G05B 19/042

(54) **QUALIFIZIERUNG EINES GERÄTETREIBERS FÜR EIN GERÄT**
DEVICE DRIVER QUALIFICATION FOR A DEVICE
QUALIFICATION D'UN PILOTE DE PÉRIPHÉRIQUE POUR UN APPAREIL

(43) Veröffentlichungstag der Anmeldung: 14.07.2021
(73) Patentinhaber: Elektrobit Automotive GmbH, 91058 Erlangen (DE)
(72) Erfinder: Lampka, Kai, 65824 Schwalbach a. Ts. (DE)
(74) Vertreter: Continental Corporation

(56) Entgegenhaltungen:
- EP-A1- 2 597 842
- EP-A1- 3 021 220
- WO-A1-99/66398
- US-A1- 2007 233 509
- US-A1- 2011 246 171
- US-A1- 2016 019 105
- US-A1- 2018 203 713
- US-A1- 2019 121 745

## Beschreibung

Die vorliegende Erfindung betrifft ein Verfahren, ein Computerprogramm mit Instruktionen und eine Vorrichtung zum Qualifizieren eines Gerätetreibers für ein Gerät.

In vielen Anwendungsbereichen ist es erforderlich, Gerätetreiber auf ihre Robustheit zu überprüfen, d.h. die Gerätetreiber zu qualifizieren. Oftmals wird dazu ein Hardware-in-the-Loop-Testansatz verfolgt, insbesondere in der Automobilindustrie. Hardware-in-the-Loop bezeichnet dabei ein Verfahren, bei dem ein System über seine Ein- und Ausgänge an ein angepasstes Gegenstück angeschlossen wird, das als Nachbildung der realen Umgebung des Systems dient. Bestandteil der Qualifizierung sind üblicherweise Tests mittels Fehlerinjektion sowie Tests von selten auftretenden Fällen, sogenannten Corner Cases. Dazu ist es erforderlich, mittels elektrischer Ausrüstung, beispielsweise Pulsgeneratoren, Oszilloskopen oder Simulatoren für physische Geräte, Fehler des Geräts, für das der Gerätetreiber vorgesehen ist, zu provozieren. Zudem kann es erforderlich sein, das Gerät unter Extrembedingungen in einer Klimakammer zu betreiben, um Tests selten auftretender Fälle zu ermöglichen. Nachteilig an diesem Ansatz ist, dass kostspielige Ausrüstung bereitgehalten werden muss. Zudem sind die Teste zeitaufwändig.

US 2018/203713 A1 beschreibt ein Verfahren zur Verifizierung der funktionalen Korrektheit eines Gerätetreibers für eine Controller-Hardwarekomponente, die in einer Emulationsumgebung mit einem virtuellen Prozessor emuliert wird.
EP 2 597 842 A1 beschreibt die Emulation einer Datennetzschnittstelle für den Betrieb eines Verbindungscontrollers in Übereinstimmung mit einem Netzstandard. US 2007/233509 A1 beschreibt ein Verfahren zur Funktionsprüfung eines elektronischen Geräts, das für die elektrische Verbindung mit einer Netzspannungsquelle, mit einer oder mehreren gesteuerten Netzspannungs-Lastvorrichtungen und mit einer Schalttafelsteuerung zur Eingabe von Benutzerbefehlen im normalen Gebrauch konfiguriert ist. US 2019/121745 A1 beschreibt ein Verfahren zum Neuzuordnen von virtuellen Geräten zu virtuellen Maschinen. US 2016/019105 A1 beschreibt eine in einen Computer eingebettete Vorrichtung mit einer Prozesssteuerungseinheit, die mit einer Vielzahl von Softwareschichten konfiguriert ist, wobei jede der Schichten einen Dienst für eine obere Schicht bereitstellt und jede der Schichten eine Nachrichtenverarbeitungseinheit enthält, die so konfiguriert ist, dass sie eine Folge von Nachrichten steuert, die in die Schicht eingegeben oder von ihr ausgegeben werden.

Es ist eine Aufgabe der vorliegenden Erfindung, eine verbesserte Lösung für eine Qualifizierung eines Gerätetreibers für ein Gerät bereitzustellen.

Diese Aufgabe wird durch ein Verfahren zum Qualifizieren eines Gerätetreibers für ein Gerät mit den Merkmalen des Anspruchs 1, durch eine Vorrichtung zum Qualifizieren eines Gerätetreibers für ein Gerät mit den Merkmalen des Anspruchs 9 sowie durch ein Computerprogramm mit Instruktionen mit den Merkmalen des Anspruchs 10 gelöst. Bevorzugte Ausgestaltungen der Erfindung sind Gegenstand der abhängigen Ansprüche.

Gemäß einem ersten Aspekt der Erfindung umfasst ein Verfahren zum Qualifizieren eines Gerätetreibers für ein Gerät die in Anspruch 1 genannten Schritte.

Gemäß einem weiteren Aspekt der Erfindung weist eine Vorrichtung zum Qualifizieren eines Gerätetreibers für ein Gerät die in Anspruch 9 genannten Merkmale auf.

Gemäß einem weiteren Aspekt der Erfindung umfasst ein Computerprogramm die in Anspruch 10 genannten Merkmale.

Der Begriff Computer ist dabei breit zu verstehen. Insbesondere umfasst er auch Workstations und andere prozessorbasierte Datenverarbeitungsvorrichtungen.

Das Computerprogramm kann beispielsweise für einen elektronischen Abruf bereitgestellt werden oder auf einem computerlesbaren Speichermedium gespeichert sein.

Bei der erfindungsgemäßen Lösung werden für die Geräte, deren Gerätetreiber qualifiziert werden sollen, Geräteemulatoren bereitgestellt, die dedizierte Geräte oder das Geräteverhalten nachbilden. Diese Geräteemulatoren, die als ausführbare Dateien implementiert sind, können anstelle der realen Hardware verwendet werden. Sie ermöglichen es, Geräteverhalten zu simulieren, welches beim realen Gerät unter normalen Bedingungen nur selten vorkommt. Die Geräteemulatoren erlauben es somit, das Verhalten des Gerätetreibers unter bestimmten Bedingungen zu testen und damit Fehlerinjektionstests und Tests selten auftretender Fälle zu unterstützen, ohne dass Tests mit echter Hardware unter extremen Bedingungen durchgeführt werden müssen, sofern dies überhaupt möglich ist. Auswirkungen auf das Geräte-Timing und die Gerätefunktionalität werden bei der erfindungsgemäßen Lösung im Emulator simuliert, d.h. auf der Grundlage eines entsprechenden Programms, anstatt von der Umgebung oder der elektrischen Ausrüstung erzwungen zu werden. Auf entsprechende elektrische Ausrüstung oder Klimakammern kann daher verzichtet werden. Die erfindungsgemäße Lösung basiert somit rein auf Software. Ein weiterer Vorteil besteht darin, dass deutlich mehr Tests in kürzerer Zeit durchgeführt werden können, da das zeitliche Verhalten des in Software abgebildeten Emulators, z.B. die Datenverarbeitung, um ein Vielfaches schneller sein kann als das des echten Gerätes. Zudem kann das Verfahren in automatisierbaren Testabläufen durchgeführt werden.

Der beschriebene Ansatz ermöglicht die Durchführung aller erforderlichen Tests für die Qualifizierung der Gerätetreiber, wie sie in MCALs (MCAL: Microcontroller Abstraction Layer; Abstraktionsschicht für Mikrocontroller) [1], Board Support Packages von Linux [2] oder allgemein von Betriebssystemen zur Gerätebedienung verwendet werden.

Gemäß einem Aspekt der Erfindung emuliert der Geräteemulator ein Geräteverhalten, das einem für das Gerät anwendbaren Standard entspricht. Die Geräteemulatoren sind so ausgestaltet, dass die Geräte sich standardkonform verhalten, d.h. so wie es im für das Gerät anwendbaren Standard vorgesehen ist. Ein Beispiel für einen solchen Standard ist JEDEC 5.1 [3]. Da die tatsächlichen Geräte die Anforderungen des jeweiligen Standards erfüllen müssen, ist ein solcher Ansatz ausreichend, um ein Verhalten eines realen Gerätes zu emulieren. Es kann allerdings vorkommen, dass sich im späteren Einsatz des Gerätetreibers ein Gerät nicht so verhält, wie es während der Tests der Fall war, z.B. weil im realen Einsatz eine Überhitzung des Gerätes auftritt, die im Labor nicht Bestandteil des Tests war. Derartige Abweichungen vom standardkonformen Verhalten gehen dann aber zu Lasten des Geräteanbieters und liegen nicht in der Verantwortung des Gerätetreibers.

Gemäß einem Aspekt der Erfindung emuliert der Geräteemulator Auswirkungen von Umgebungseinflüssen auf das Gerät. Neben Fehlerinjektionstests und Tests selten auftretender Fälle kann der Geräteemulator genutzt werden, um ganz allgemein das Geräteverhalten unter wechselnden Umgebungsbedingungen zu emulieren, z.B. bei unterschiedlichen Umgebungstemperaturen. Auf diese Weise kann der Gerätetreiber für den gesamten spezifizierten Betriebsbereich des Gerätes qualifiziert werden.

Gemäß der Erfindung ist der Geräteemulator Bestandteil einer Virtualisierungsumgebung. Bei der Virtualisierungsumgebung kann es sich beispielsweise um einen Hypervisor handeln. Ein weiterer Aspekt der erfindungsgemäßen Lösung neben der der Verwendung von Geräteemulatoren ist eine geeignete Virtualisierungsumgebung, wie sie beispielsweise von QEMU [4] oder vom EB corbos Hypervisor [5] bereitgestellt wird. Die erfindungsgemäße Lösung ermöglicht eine Zusammenführung von Hypervisor-basierter Prozessor-Virtualisierung und Geräteemulation. Qualifikationstests werden auf diese Weise in Form von Software-in-the-Loop-Tests realisiert.

Gemäß einem Aspekt der Erfindung nimmt die Virtualisierungsumgebung eine Zuordnung zwischen virtuellen Adressen und physikalischen Adressen vor. Virtualisierungsumgebungen ermöglichen es, die Zuordnung von virtuellen Adressen zu physischen Adressen auf transparente Weise zu manipulieren und damit eine transparente Zuordnung des Gerätetreibers zum Geräteemulator zu ermöglichen. Dem Gerätetreiber bleibt daher verborgen, dass er an eine andere Software-Komponente gekoppelt ist und nicht an das reale Gerät bzw. mit einer Software-Komponente kommuniziert. Anders formuliert, der Input/Output-Speicher wird nicht von dem Gerät bedient, welches an einer festen Adresse seinen Input/Output-Speicher hat, sondern von dem Emulator. Der Geräteemulator wiederum kann beim Empfang von Operationssequenzen des Gerätetreibers jeden gewünschten Fehlerzustand zurücksenden.

Die obige Darstellung zielt darauf ab, dass der zu testende Gerätetreiber im Allgemeinen in einem Betriebssystem, wie Linux, QNX [6], Autosar OS, FreeRTOS [7] usw., oder direkt in die Virtualisierungsumgebung eingebettet ist. Gemäß der Erfindung muss der Gerätetreiber somit nicht notwendigerweise direkter Teil der Virtualisierungsumgebung, die den Emulator beinhaltet, sein. Der Gerätetreiber kann auch extern, beispielsweise als Teil eines der oben genannten Betriebssysteme, betrieben werden. Dies sollte während und außerhalb des Testbetriebes gleich sein. Diese zu der Virtualisierungsumgebung externe Software, mit oder ohne eigenem Betriebssystem, wird selbst in die Virtualisierungsumgebung integriert. Man spricht hier von einem Gerätetreiber, der Teil eines sogenannten Gast-Betriebssystems ist und als Bestandteil einer sogenannten virtuellen Maschine betrachtet wird, mit virtueller Maschine als Container-Objekt im Sinne einer Virtualisierungsumgebung.

Gemäß der erfindungsgemäßen Lösung ist der Gerätetreiber Bestandteil einer virtuellen Maschine oder direkt in die Virtualisierungsumgebung integriert, ganz wie es die spätere Benutzung nach der Qualifizierung vorsieht.

Gemäß einem Aspekt der Erfindung ist der Gerätetreiber direkt in die Virtualisierungsumgebung eingebettet. Der Gerätetreiber muss nicht notwendigerweise Teil einer virtuellen Maschine sein, beispielsweise eines Gast-Betriebssystems. Sollte dabei das zu betreibende Gerät von mehreren Gast-Betriebssystemen gleichzeitig benutzt werden, und verfügt das Gerät selbst über keine Virtualisierungsunterstützung, so ist es notwendig, dass die Virtualisierungsfunktion in Software realisiert wird. Der eigentliche Gerätezugriff wird dabei durch den in die Virtualisierungsschicht eingebetteten Gerätetreiber realisiert. Das verlangt, dass die virtuellen Maschinen und deren Gast-Betriebssysteme hingegen einen entsprechend auf die Virtualisierungsschicht abgestellten Gerätetreiber verwenden. Solche Treiber werden im Folgenden als virtualisierungsfähige Gerätetreiber bezeichnet.

Der Testaufbau mit virtualisierungsfähigen Treibern beinhaltet somit nicht nur die Qualifikation des originären Gerätetreibers, also des Treibers der das physische Gerät tatsächlich aussteuert, sondern auch das Testen der virtualisierungsfähigen Gerätetreiber in den virtuellen Maschinen und deren Gegenstück in der Virtualisierungsschicht.

Gemäß einem Aspekt der Erfindung dient der Geräteemulator als Frontend für das emulierte Gerät. Dieser Ansatz hat den Vorteil, dass beispielsweise das Booten des Systems erleichtert wird, insbesondere das Booten eines Gast-Betriebssystems, da das zeitliche Verhalten des in Software abgebildeten Emulators um ein Vielfaches schneller sein kann als das des echten Gerätes.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt schematisch ein Verfahren zum Qualifizieren eines Gerätetreibers für ein Gerät;
- Fig. 2: zeigt schematisch eine erste Ausführungsform einer Vorrichtung zum Qualifizieren eines Gerätetreibers für ein Gerät;
- Fig. 3: zeigt schematisch eine zweite Ausführungsform einer Vorrichtung zum Qualifizieren eines Gerätetreibers für ein Gerät;
- Fig. 4: zeigt eine Ausführungsform der erfindungsgemäßen Lösung, bei der der Gerätetreiber Bestandteil eines Gast-Betriebssystems ist;
- Fig. 5: zeigt eine Ausführungsform der erfindungsgemäßen Lösung, bei der der Gerätetreiber Bestandteil einer Virtualisierungsumgebung ist; und
- Fig. 6: zeigt ein Schema einer erfindungsgemäßen Qualifizierung eines Gerätetreibers für ein Gerät.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

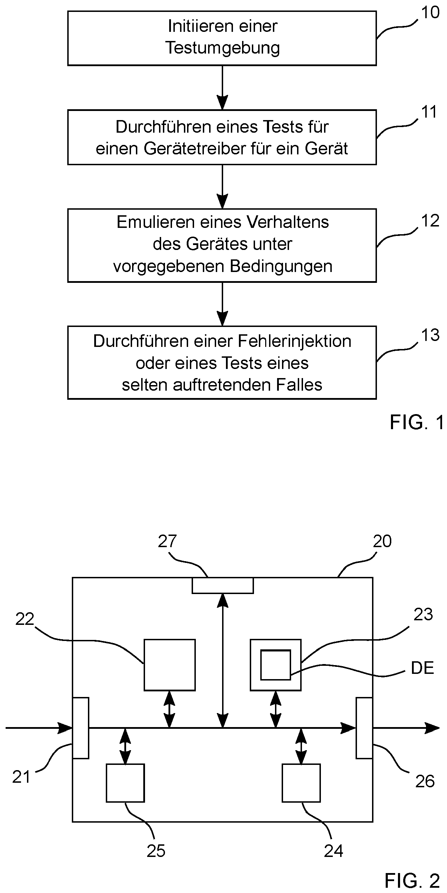

Fig. 1 zeigt schematisch ein Verfahren zum Qualifizieren eines Gerätetreibers für ein Gerät. Nach einem Initiieren 10 einer Testumgebung wird ein Test des Gerätetreibers durchgeführt 11. Dabei emuliert 12 ein Geräteemulator ein Verhalten des Gerätes unter vorgegebenen Bedingungen. Vorzugsweise wird dabei ein Geräteverhalten emuliert 12, das einem für das Gerät anwendbaren Standard entspricht. Insbesondere können auch Auswirkungen von Umgebungseinflüssen auf das Gerät emuliert werden. Während des Tests führt der Geräteemulator eine Fehlerinjektion oder einen Test zumindest eines selten auftretenden Falles durch 13. Der Geräteemulator ist Bestandteil einer Virtualisierungsumgebung, z.B. eines Hypervisors. Die Virtualisierungsumgebung nimmt dabei eine Zuordnung zwischen virtuellen Adressen und physikalischen Adressen vor. Der Geräteemulator kann zudem als Frontend für das emulierte Gerät dienen. Der Gerätetreiber kann Bestandteil der Virtualisierungsumgebung sein oder in ein Gast-Betriebssystem integriert sein, welches in der Virtualisierungsumgebung zur Ausführung gebracht wird.

Gemäß den obigen Ausführungen besteht der Softwareanteil eines Testsystems somit aus Gerätetreibern, Geräteemulator, Virtualisierungsschicht, beispielsweise in Form eines Hypervisors, den Anwendungen der Virtualisierungsschicht und einem oder mehreren Gast-Betriebssystemen.

Fig. 2 zeigt eine vereinfachte schematische Darstellung einer ersten Ausführungsform einer Vorrichtung 20 zum Qualifizieren eines Gerätetreibers für ein Gerät. Die Vorrichtung 20 hat einen Eingang 21, über den Daten empfangen werden können, z.B. der zu qualifizierende Gerätetreiber. Ein Testmodul 22 ist dazu eingerichtet, einen Test des Gerätetreibers durchzuführen. Ein Geräteemulator DE ist eingerichtet, während des Tests ein Verhalten des Gerätes unter vorgegebenen Bedingungen zu emulieren und eine Fehlerinjektion oder einen Test zumindest eines selten auftretenden Falles durchzuführen. Vorzugsweise ist der Geräteemulator DE dabei eingerichtet, ein Geräteverhalten zu emulieren, das einem für das Gerät anwendbaren Standard entspricht. Insbesondere können durch den Geräteemulator DE auch Auswirkungen von Umgebungseinflüssen auf das Gerät emuliert werden. Der Geräteemulator DE kann beispielsweise auf einem Prozessor 23 laufen. Er ist Bestandteil einer Virtualisierungsumgebung, z.B. eines Hypervisors. Die Virtualisierungsumgebung nimmt dabei eine Zuordnung zwischen virtuellen Adressen und physikalischen Adressen vor. Der Geräteemulator DE kann zudem als Frontend für das emulierte Gerät dienen. Auch der Gerätetreiber kann Bestandteil der Virtualisierungsumgebung sein. Die ermittelten Testergebnisse werden über einen Ausgang 26 der Vorrichtung 20 ausgegeben.

Das Testmodul 22 und der Prozessor 23 können von einer Kontrolleinheit 24 gesteuert werden. Über eine Benutzerschnittstelle 27 können gegebenenfalls Einstellungen des Testmoduls 22, des Prozessors 23 oder der Kontrolleinheit 24 geändert werden. Die in der Vorrichtung 20 anfallenden Daten können bei Bedarf in einem Speicher 25 der Vorrichtung 20 abgelegt werden, beispielsweise für eine spätere Auswertung oder für eine Nutzung durch die Komponenten der Vorrichtung 20. Das Testmodul 22, der Prozessor 23 sowie die Kontrolleinheit 24 können als dedizierte Hardware realisiert sein, beispielsweise als integrierte Schaltungen. Natürlich können sie aber auch teilweise oder vollständig kombiniert werden, beispielsweise in einer GPU oder einer CPU. Der Eingang 21 und der Ausgang 26 können als getrennte Schnittstellen oder als eine kombinierte bidirektionale Schnittstelle implementiert sein.

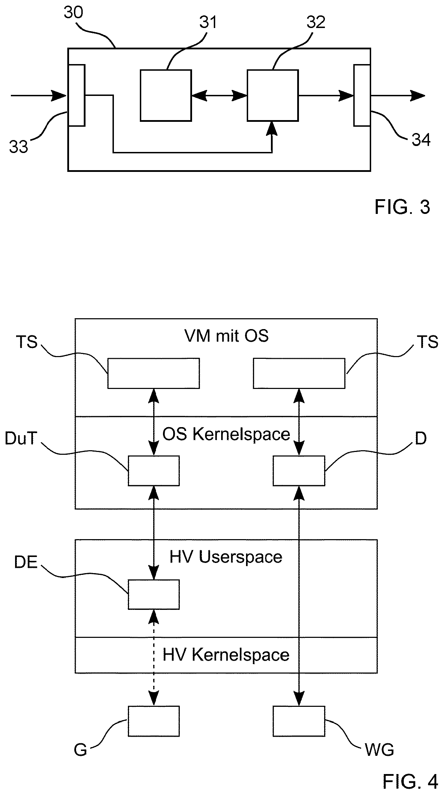

Fig. 3 zeigt eine vereinfachte schematische Darstellung einer zweiten Ausführungsform einer Vorrichtung 30 zum Qualifizieren eines Gerätetreibers für ein Gerät. Die Vorrichtung 30 weist einen Prozessor 32 und einen Speicher 31 auf. Beispielsweise handelt es sich bei der Vorrichtung 30 um einen Computer oder einen Grafikchip. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Informationen. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 25, 31 der beschriebenen Vorrichtungen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

Fig. 2 und Fig. 3 geben eine Blackbox-Sicht auf das Testsystem wieder, d.h. der konkrete Aufbau des Softwareanteils des Testsystems ist hier abstrahiert.

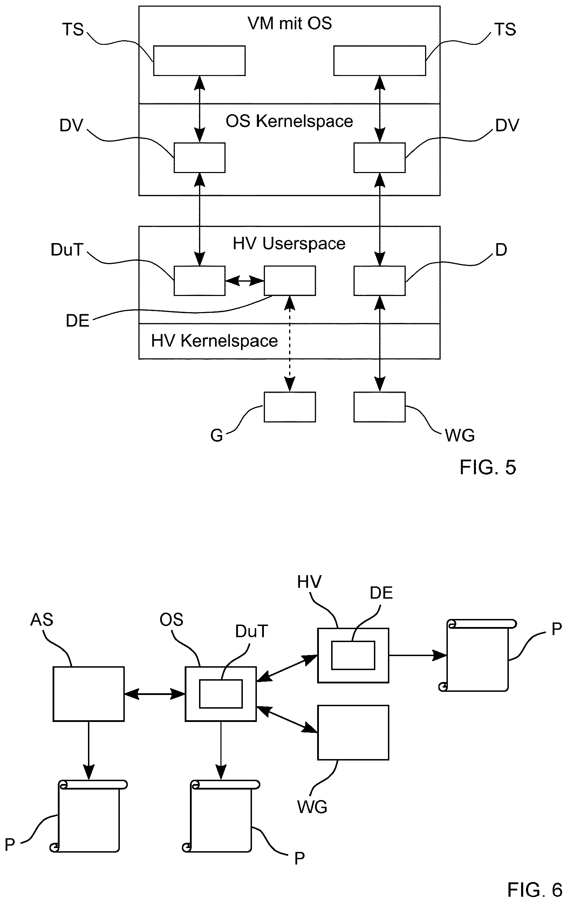

Fig. 4 und Fig. 5 beschäftigen sich nun mit dem konkreten Aufbau des Softwareanteils des Testsystems, bestehend aus Gerätetreibern, Geräteemulator, Virtualisierungsschicht, beispielsweise in Form eines Hypervisors, den Anwendungen der Virtualisierungsschicht, einem oder mehreren Gast-Betriebssystemen und gegebenenfalls deren virtualisierungsfähigen Gerätetreibern.

Fig. 4 zeigt eine Ausführungsform der erfindungsgemäßen Lösung. Der Gerätetreiber DuT ist Bestandteil eines Gast-Betriebssystems OS, das in einer virtuellen Maschine VM auf einer Virtualisierungsschicht läuft. Durch das Gast-Betriebssystem OS wird ein Test-Skript TS ausgeführt. Der zu qualifizierende Gerätetreiber DuT läuft im Adressraum des Gast-Betriebssystems OS, d.h. in dem von der Virtualisierungsumgebung für den Gast reservierten Bereich im Arbeitsspeicher. Dort können zudem weitere Gerätetreiber D für nicht virtualisierte weitere Geräte WG laufen, die nicht Gegenstand der Qualifizierung sind. Die erfindungsgemäße Lösung ist dabei nicht auf vollständig virtualisierte Betriebssysteme beschränkt. D.h., der Gast kann auch auf eigner Hardware neben der Virtualisierungsschicht laufen und mit dieser über Speicher und Signale kommunizieren.

Fig. 4 stellt den allgemeinen Fall dar, dass der Gerätetreiber DuT Teil des Kerns oder Kernels des Gast-Betriebssystem OS ist und somit im Kernelspace des Gastes läuft. Die erfindungsgemäße Lösung bezieht sich somit auch auf Aufbauten, bei denen der Gerätetreiber DuT auch im sogenannten Userspace des Gast-Betriebssystems zur Ausführung gebracht wird, was im Weiteren nicht explizit adressiert wird, aber auch angenommen werden kann.

Der Geräteemulator DE für den zu qualifizierenden Gerätetreiber DuT ist Bestandteil einer Virtualisierungsumgebung HV, in diesem Beispiel eines Hypervisors, und läuft daher in dem von der Virtualisierungsumgebung HV vorgesehenen Adressbereich des Gast-Betriebssystems OS. Die Darstellung illustriert erneut einen gängigen Fall, bei dem der Emulator DE in seinem eigenen Adressraum als Bestandteil des Benutzeradressraums zur Ausführung gebracht wird. Wie im Falle des Gast-Betriebssystems OS, ist es auch hier möglich, dass der Geräteemulator DE in den Adressraum des Kerns der Virtualisierungsumgebung HV eingebettet ist, dem HV Kernelspace. Die Darstellung ist analog zu oben zu sehen und hängt von der benutzten Virtualisierungsumgebung HV ab. Der Fall, bei dem der Emulator DE innerhalb des Adressraums der Virtualisierungsumgebung HV zur Ausführung gebracht wird, wird im Weiteren nicht explizit adressiert, kann aber alternativ angenommen werden.

Für alle Paare aus Gerät WG und Gerätetreiber D, die nicht getestet werden, können die Geräte WG in den entsprechenden Adressraum des Gast-Betriebssystems OS direkt abgebildet werden, was man auch als Device-Passthrough bezeichnet. Bei dem Device-Passthrough werden die Geräte WG quasi an den Gast durchgereicht. Für diese weiteren Geräte WG ist das Verhalten praktisch so, als wäre die Virtualisierungsumgebung HV bzw. der Hypervisor nicht vorhanden, abgesehen von einer Interrupt-Behandlung.

Für den zu qualifizierenden Gerätetreiber DuT wird hingegen der Geräteemulator DE in den Adressraum des Gast-Betriebssystems OS abgebildet, d.h. der Gast und der Emulator DE kommunizieren über den einen gemeinsamen Input/Output-Speicher. Dies erlaubt es, einfach das zu erwartende Geräteverhalten oder auch beispielsweise Fehler zu injizieren. Der Geräteemulator DE bildet dabei entweder das komplette Verhalten des physischen Gerätes G ab oder dient als Frontend für das entsprechende Gerät G.

Eine Kombination von Emulator DE und Gerät G ist dann sinnvoll, wenn der Emulator DE nicht das komplette Verhaltensspektrum des Gerätes G abdeckt oder das Gerät G Daten zurückgeben muss, die für das Systemverhalten von Bedeutung sind, beispielsweise Programmdaten, die während des Bootvorganges des Gast-Betriebssystems OS benötigt werden oder komplexe Berechnungsergebnisse, die nicht vom Emulator DE erzeugt werden können, usw.

Fig. 5 zeigt eine Ausführungsform der erfindungsgemäßen Lösung, bei der der zu qualifizierende Gerätetreiber DuT Bestandteil der Virtualisierungsumgebung ist. Der Aufbau ist ansonsten analog zu dem aus Fig. 4 und der Geräteemulator DE kann auch als hier als Frontend zum Gerät G dienen oder dessen Verhalten komplett simulieren. Wie zuvor kann der Geräteemulator DE in den Adressraum des Gerätetreibers abgebildet werden und es können Fehler durch den Geräteemulator DE injiziert werden. Im Unterschied zur Fig. 4 läuft hier ein virtualisierungsfähiger Gerätetreiber DV im Gast-Betriebssystem und dessen Gegenstück inklusive dem echten Gerätetreiber DuT im Userspace der Virtualisierungsumgebung HV. Somit kann der Gerätetreiber der Virtualisierungsumgebung selbst gegen den Emulator DE getestet werden und aus dem Gast-Betriebssystem OS realistisches Benutzungsverhalten des Gerätes G stimuliert werden.

Grundsätzlich werden also Gerätetreiber in diesem Aufbau getestet, die davon ausgehen, dass sie das Gerät G physisch vor sich haben, Gerätetreiber DuT und Gerätetreiber DV, die speziell für den Einsatz in Gast-Betriebssystemen über eine entsprechende Virtualisierungsunterstützung verfügen. Letztere Gerätetreiber DV wurden oben schon als virtualisierungsfähige Gerätetreiber DV eingeführt. Den virtualisierten Treiber DV in der virtuellen Maschine zu nutzen hat den Vorteil, dass so die Gerätebenutzung von oben durch Software wie im realen Betrieb simuliert werden kann, also reale Anwendungsfälle des Gerätes G abgefahren werden können.

Fig. 4 und Fig. 5 stellen somit zwei Beispiele eines Testaufbaus dar, bei denen der zu testende Gerätetreiber an unterschiedlichen Stellen eingebunden wird. Grundsätzlich ist es aber für die erfindungsgemäße Lösung unerheblich, ob der Gerätetreiber in der virtuellen Maschine als Teil eines Kerns eines Gast-Betriebssystems, als Teil dessen Userspace oder in der Virtualisierungsumgebung zur Ausführung gebracht wird. Auch ist es unerheblich, ob der Gerätetreiber im Falle der Einbindung in der Virtualisierungsumgebung in deren Kern oder deren Userspace ausgeführt wird.

Neben den in Fig. 4 und Fig. 5 dargestellten Einsatzklassen kann ein weitere Klasse unterschieden werden. Diese Klasse adressiert den Einsatz von Geräten, die selbst über eine eingebaute Virtualisierungsunterstützung verfügen. Beispiel hierfür sind GPUs oder andere in Hardware implementierte Berechnungsbeschleuniger. In diesem Fall ist der Gerätetreiber im Gast-Betriebssystem so konzipiert, dass er unabhängig und gleichzeitig zu anderen Gast-Betriebssystemen das Gerät benutzen kann. Es ist das Gerät selbst, welches mit mehreren Klienten umgehen kann. Aus Sicht des Gerätetreibers im Gast-Betriebssystem sieht es somit so aus, als wenn das Gerät exklusiv von ihm benutzt wird. Auch hier sieht es für den Gerätetreiber so aus, als wenn er das physische Gerät vor sich hat. Somit kann auch in diesem Fall der Gerätetreiber gegen den Emulator getestet werden, denn auch hier greift am Ende der Gerätetreiber immer nur auf den ihm zugewiesenen Input/Output-Speicher zu. Ob letzterer nun von dem echten Gerät oder dem Emulator bedient wird, ist auch hier transparent. Dieser Aufbau erlaubt es somit auch Gerätetreiber zu testen, die für Geräte mit eingebauter Virtualisierungsunterstützung implementiert wurden. Für den Emulator ist es unerheblich, er läuft gegen den einen Gerätetreiber, egal ob dieser für Geräte mit oder ohne Virtualisierungsunterstützung implementiert wurden und egal ob der Gerätetreiber im Gast-Betriebssystem oder direkt in der Virtualisierungsschicht eingebettet wurde.

Fig. 6 zeigt ein Schema einer erfindungsgemäßen Qualifizierung eines Gerätetreibers für ein Gerät. Der Gerätetreiber DuT ist hier Bestandteil eines Gast-Betriebssystems OS. Der Geräteemulator DE und die Fehlerinjektionstests bzw. Testszenarien sind in der Virtualisierungsumgebung HV implementiert. Die Virtualisierungsumgebung HV und das Gast-Betriebssystem OS sind so konfiguriert, dass das Gerät, für das der Gerätetreiber DuT qualifiziert werden soll, und der Geräteemulator DE auf die gleichen physikalischen Adressen abgebildet werden. Für eventuelle weitere Geräte WG im Gast-Betriebssystem kann ein Device-Passthrough erfolgen. Alternativ können aber auch Emulationen von anderen Geräten vorgenommen werden.

Für die Automatisierung der Tests wird eine Testumgebung in Form einer Anwendungssoftware AS bereitgestellt, z.B. als Bestandteil von Jenkins [8], etc. Während der Tests können sowohl von der Anwendungssoftware AS als auch vom Betriebssystems OS und der Virtualisierungsumgebung HV Protokolle P der Testläufe angelegt werden, die nach Abschluss der Test ausgewertet werden können. Das Schema aus Fig. 6 kann natürlich auch ohne den Geräteemulator DE genutzt werden, um das Gerät selbst einem Stresstest zu unterziehen. Die Tests selber können als Skript auf dem Gast-Betriebssystems OS ausgeführt werden, z.B. als Nutzungsprofile. Das gewünschte Verhalten, das emuliert wird, beispielsweise ein Fehlerverhalten oder ein positives Verhalten, wird im Emulator DE hinterlegt bzw. implementiert. Umgekehrt ist es bei der Verwendung eines Emulators DE nicht erforderlich, dass tatsächlich ein Gerät G vorhanden ist. Dazu muss der Emulator DE das gesamte Input/Output-Verhalten des Gerätes G nachspielen können. Werden sowohl Gerät G als auch Emulator DE verwendet, kann eine Mischform umgesetzt werden, die ebenfalls vorteilhaft sein kann.

### Referenzen

[1] https://www.autosar.org
[2] https://en.wikipedia.org/wiki/Board_support_package
[3] https://www.jedec.org
[4] https://www.qemu.org
[5] https://www.elektrobit.com/products/ecu/eb-corbos/hypervisor/
[6] https://blackberry.qnx.com/de
[7] https://www.freertos.org/
[8] https://jenkins.io/

## Patentansprüche

1. Verfahren zum Qualifizieren eines Gerätetreibers (DuT) für ein Gerät (G), mit den Schritten:
- Durchführen (11) eines Software-in-the-Loop-Tests des Gerätetreibers (DuT) durch ein Testmodul (22),
wobei der Gerätetreiber (DuT) Bestandteil eines Gast-Betriebssystems (OS) ist, das in einer virtuellen Maschine (VM) auf einer Virtualisierungsschicht einer Virtualisierungsumgebung (HV) läuft,
wobei ein Test-Skript (TS) durch das Gast-Betriebssystem (OS) ausgeführt wird;
- Emulieren (12) eines Verhaltens des Gerätes (G) unter vorgegebenen Bedingungen durch einen Geräteemulator (DE), der Bestandteil der Virtualisierungsumgebung (HV) ist,
wobei der Geräteemulator (DE) in den Adressraum des Gast-Betriebssystems (OS) abgebildet ist, so dass der Gerätetreiber (DuT) und der Geräteemulator (DE) über den einen gemeinsamen Input/Output-Speicher kommunizieren;
- Durchführen (13) einer Fehlerinjektion oder eines Tests durch den Geräteemulator (DE), indem der Geräteemulator (DE) ein zu erwartendes Geräteverhalten oder einen gewünschten Fehlerzustand injiziert; und
- Ausgeben der Testergebnisse.

2. Verfahren gemäß Anspruch 1, wobei der Geräteemulator (DE) ein Geräteverhalten emuliert (12), das einem für das Gerät (G) anwendbaren Standard entspricht.

3. Verfahren gemäß Anspruch 1 oder 2, wobei der Geräteemulator (DE) Auswirkungen von Umgebungseinflüssen auf das Gerät (G) emuliert.

4. Verfahren gemäß einem der vorherigen Ansprüche, wobei die Virtualisierungsumgebung (HV) eine Zuordnung zwischen virtuellen Adressen und physikalischen Adressen vornimmt.

5. Verfahren gemäß Anspruch 4, wobei die Virtualisierungsumgebung (HV) ein Hypervisor ist.

6. Verfahren gemäß einem der Ansprüche 4 oder 5, wobei der Gerätetreiber (DuT) als Bestandteil einer virtuellen Maschine in die Virtualisierungsumgebung (HV) integriert ist.

7. Verfahren gemäß einem der Ansprüche 4 oder 5, wobei der Gerätetreiber (DuT) unabhängig von der Virtualisierungsumgebung (HV) betrieben wird.

8. Verfahren gemäß einem der vorherigen Ansprüche, wobei der Geräteemulator (DE) als Frontend für das emulierte Gerät (G) dient.

9. Vorrichtung (20) zum Qualifizieren eines Gerätetreibers (DuT) für ein Gerät (G), umfassend ein Testmodul (22), einen Geräteemulator (DE) und einen Ausgang (26), wobei die Vorrichtung eingerichtet ist, das Verfahren nach einem der Ansprüche 1-8 durchzuführen.

10. Computerprogramm mit Instruktionen, die, wenn sie auf einer Vorrichtung gemäß Anspruch 9 ausgeführt werden, die Ausführung der Schritte eines Verfahrens gemäß einem der Ansprüche 1 bis 8 zum Qualifizieren eines Gerätetreibers (DuT) veranlassen.

## Claims

1. Method for qualifying a device driver (DuT) for a device (G), having the steps of:
- performing (11) a software-in-the-loop test on the device driver (DuT) by way of a test module (22),
the device driver (DuT) being part of a guest operating system (OS) that runs in a virtual machine (VM) on a virtualization layer of a virtualization environment (HV),
wherein a test script (TS) is executed by the guest operating system (OS);
- emulating (12) a behaviour of the device (G) under stipulated conditions by way of a device emulator (DE) that is part of the virtualization environment (HV),
the device emulator (DE) being mapped to the address space of the guest operating system (OS), with the result that the device driver (DuT) and the device emulator (DE) communicate via the one common input/output memory;
- performing (13) an error injection or a test by way of the device emulator (DE) by virtue of the device emulator (DE) injecting a device behaviour to be expected or a desired error state; and
- outputting the test results.

2. Method according to Claim 1, wherein the device emulator (DE) emulates a device behaviour (12) that is consistent with a standard usable for the device (G).

3. Method according to Claim 1 or 2, wherein the device emulator (DE) emulates effects of environmental influences on the device (G).

4. Method according to one of the preceding claims, wherein the virtualization environment (HV) makes an association between virtual addresses and physical addresses.

5. Method according to Claim 4, wherein the virtualization environment (HV) is a hypervisor.

6. Method according to either of Claims 4 and 5, wherein the device driver (DuT) is integrated in the virtualization environment (HV) as part of a virtual machine.

7. Method according to either of Claims 4 and 5, wherein the device driver (DuT) is operated independently of the virtualization environment (HV).

8. Method according to one of the preceding claims, wherein the device emulator (DE) serves as a front end for the emulated device (G).

9. Apparatus (20) for qualifying a device driver (DuT) for a device (G), comprising a test module (22), a device emulator (DE) and an output (26), the apparatus being designed to perform the method according to one of Claims 1-8.

10. Computer program containing instructions that, when executed on an apparatus according to Claim 9, prompt performance of the steps of a method according to one of Claims 1 to 8 for qualifying a device driver (DuT).

## Revendications

1. Procédé de qualification d'un pilote de périphérique (DuT) destiné à un périphérique (G), ledit procédé comprenant les étapes suivantes :
- effectuer (11) un test logiciel en boucle du pilote de périphérique (DuT) à l'aide d'un module de test (22),
le pilote de périphérique (DuT) faisant partie d'un système d'exploitation hôte (OS) qui est exécuté dans une machine virtuelle (VM) sur une couche de virtualisation d'un environnement de virtualisation (HV),
un script de test (TS) étant exécuté par le système d'exploitation hôte (OS) ;
- émuler (12) un comportement du périphérique (G) dans des conditions spécifiées à l'aide d'un émulateur de périphérique (DE) qui fait partie de l'environnement de virtualisation (HV),
l'émulateur de périphérique (DE) étant reproduit dans l'espace d'adressage du système d'exploitation hôte (OS) de sorte que le pilote de périphérique (DuT) et l'émulateur de périphérique (DE) communiquent par le biais d'une mémoire d'entrée/sortie commune ;
- effectuer (13) une injection d'erreur ou un test par le biais de l'émulateur de périphérique (DE) en ce que l'émulateur de périphérique (DE) injecte un comportement de périphérique attendu ou un état d'erreur souhaité ; et
- délivrer en sortie les résultats de test.

2. Procédé selon la revendication 1, l'émulateur de périphérique (DE) émulant un comportement de périphérique (12) qui correspond à une norme applicable au périphérique (G).

3. Procédé selon la revendication 1 ou 2, l'émulateur de périphérique (DE) émulant des effets des influences environnementales sur le périphérique (G).

4. Procédé selon l'une des revendications précédentes, l'environnement de virtualisation (HV) effectuant une association entre des adresses virtuelles et des adresses physiques.

5. Procédé selon la revendication 4, l'environnement de virtualisation (HV) étant un hyperviseur.

6. Procédé selon l'une des revendications 4 ou 5, le pilote de périphérique (DuT) étant intégré en tant que partie d'une machine virtuelle dans l'environnement de virtualisation (HV).

7. Procédé selon l'une des revendications 4 ou 5, le pilote de périphérique (DuT) étant utilisé indépendamment de l'environnement de virtualisation (HV).

8. Procédé selon l'une des revendications précédentes, l'émulateur de périphérique (DE) servant de partie frontale au périphérique émulé (G).

9. Dispositif (20) de qualification d'un pilote de périphérique (DuT) destiné à un périphérique (G), ledit dispositif comprenant un module de test (22), un émulateur de périphérique (DE) et une sortie (26), le dispositif étant conçu pour mettre en oeuvre le procédé selon l'une des revendications 1 à 8.

10. Logiciel comprenant des instructions qui, lorsqu'elles sont exécutées sur un dispositif selon la revendication 9, ordonnent l'exécution des étapes d'un procédé selon l'une des revendications 1 à 8 pour qualifier un pilote de périphérique (DuT).
